# EUROPÄISCHE PATENTSCHRIFT

(11) **EP 2 731 836 B1**
(45) Veröffentlichungstag und Bekanntmachung des Hinweises auf die Patenterteilung: **31.05.2017**
(21) Anmeldenummer: 11738964.3
(22) Anmeldetag: 15.07.2011
(51) Int. Cl.: B60T 7/04, B60T 8/171, B60T 13/10, B60T 13/66, B60T 13/68, B60T 13/74, B60T 17/22, F16D 65/14, F16D 65/62, B60W 30/16, B60W 30/14

(54) **SICHERHEITSSCHALTUNG FÜR BLOCKIERENDEN ANTRIEB EINES BREMSKRAFTVERSTÄRKERS**
SAFETY CIRCUIT FOR BLOCKING DRIVE OF A BRAKE BOOSTER
CIRCUIT DE SÉCURITÉ POUR L'ACTIONNEMENT BLOQUANT D'UN SERVO-FREIN

(43) Veröffentlichungstag der Anmeldung: 21.05.2014
(73) Patentinhaber: IPGate AG, 8808 Pfäffikon (CH)
(72) Erfinder: LEIBER, Heinz, 71739 Oberriexingen (DE); UNTERFRAUNER, Valentin, 80935 München (DE); KÖGLSPERGER, Christian, 82538 Geretsried (DE)
(74) Vertreter: Würmser, Julian
(86) Internationale Anmeldenummer: PCT/EP2011/003533
(87) Internationale Veröffentlichungsnummer: WO 2013/010554

(56) Entgegenhaltungen:
- EP-A2- 0 937 620
- WO-A1-2010/017998
- DE-A1-102009 043 484
- DE-A1-102009 055 721
- GB-A- 2 207 720
- US-A1- 2003 201 669
- US-A1- 2009 045 672

## Beschreibung

### Stand der Technik

Wegen der höheren Funktionalität und auch des geringeren Einbauvolumens werden zukünftig verstärkt hydraulische Bremskraftverstärker (BKV) und insbesondere elektromechanische Bremskraftverstärker zum Einsatz kommen. Bei Bremsanlagen mit elektromechanischen Bremskraftverstärker unterscheidet man zwischen Ausführungen ohne Wegsimulator wie sie z.B. aus PCT/EP2009/000694 bekannt sind und solchen mit Wegsimulator wie sie z.B. aus DE 102005018649 und DE 102009055721 bekannt sind.

Aus WO 2010/017998 A1 ist ein Bremssystem mit adaptiv steuerbarem Bremsbelaglüftspiel bekannt, welches Speicherkammern umfasst, in denen die zur Einstellung eines Bremsbelaglüftspiels aus der Radbremse herausgedrückte Bremsflüssigkeit gespeichert wird. Die Speicherkammer dient zudem zum Nachfördern von Bremsflüssigkeit in den jeweiligen Bremskreis.

Aus US 2009/0045672 A1 ist ein Bremssystem bekannt, bei dem bei Auftreten eines Fehlers bzw. Versagens des Bremskraftverstärkers das ESP-System für die Bremskraftverstärkung eingesetzt wird.

Bei o.g. Bremskraftverstärkerausführungen besteht ein gravierendes Sicherheitsrisiko, wenn beim Druckabbau bei Zurücknahme der Pedalkraft und Pedalweg der Antrieb des Bremskraftverstärkers klemmt und kein Druckabbau mehr möglich ist. Dies führt dazu, dass bei entsprechendem Druckniveau das Fahrzeug auf der Straße stehen bleibt und durch die Leistung des Motors nicht mehr bewegt werden kann. Ähnliches kann auch bei der elektrischen Servolenkung eintreten, wenn der Motor oder das Getriebe klemmt. Um dies zu verhindern, werden aufwändige konstruktive Maßnahmen, sowie Maßnahmen zur Qualitätssicherung eingesetzt, um diesen Fall zu vermeiden.

Aufgabe der Erfindung ist es, eine kostengünstige und wirksame Maßnahme für diesen Fehlerfall bei einer Bremsanlage bereitzustellen.

Die Lösung der Aufgabe besteht darin, eine Speicherkammer zum Druckabbau in mindestens einer Radbremse zu verwenden. Hierbei können die oft schon vorhandenen Speicherkammern des konventionellen ABS- oder ESP-Systems verwendet werden, wie sie z.B. aus der DE 10 2004 050 103 bekannt sind. Bei diesen Systemen wird beim Druckabbau für die ABS-Regelung durch kurzzeitiges Öffnen des Auslassventils Druckmittel in die Speicherkammer geleitet, um dadurch ein Blockieren des betreffenden Rades zu verhindern. Das entsprechende Volumen wird durch die Rückförderpumpe in den Bremskreis und Hauptbremszylinder zurück gepumpt.

Im beschriebenen Fehlerfall mit blockierendem Antrieb wird dieser Pfad ebenso genutzt. Sofern sich der Druck in dem Bremskreis nach der Zurücknahme der Pedalkraft oder des Pedalweges nicht reduziert, was mit entsprechenden Sensoren gemessen wird, wird erfindungsgemäß das Auslassventil längere Zeit geöffnet, damit das Druckmittel in die Speicherkammer gelangt. gleichzeitig kann auch die Rückförderpumpe eingeschaltet werden.

Der hohe Druck, welcher nach dem Öffnen des Auslassventils durch die Rückförderpumpe entsteht, kann durchaus die HZ-Kolben des Bremskraftverstärkers trotz klemmenden Antriebes zurück drängen, was über die Messung von Druck oder Positionsänderung des Antriebes festgestellt werden kann.

Abhängig vom Druckniveau beim Auftreten des Klemmens kann durch diese Lösung der Druck ganz oder auf ein niedriges Niveau reduziert werden, so dass der Fahrer ggf. mit verringerter Geschwindigkeit das Fahrzeug aus der Gefahrenzone bewegen kann.

Die vorbeschriebene Verwendung einer Speicherkammer ist zudem einsetzbar bei einem Bremskraftverstärker mit Wegsimulator und Speicherkammer, wie er aus der DE102009055721 und DE 102008051316 bekannt ist. Auch hier kann im Fehlerfall Druckmittel zur Druckreduzierung nach Öffnen des vorgeschalteten Magnetventils in die Speicherkammer(n) gelangen und damit der Druck in den Radbremsen erheblich reduziert werden. Eine Fehlererkennung und Druckreduzierung gelingt bei diesem System besonders gut, da der Vorgang durch systembedingte und bereits vorhandene Sensoren für Pedalweg, HZ-Kolbenposition und Druck überwacht werden kann.

Vorteilhaft ist der Mehraufwand für die erfindungsgemäße Lösung zum Bremsdruckabbau im Fehlerfall des Antriebs oder Getriebes des Bremskraftverstärkers sehr gering. Sofern eine Speicherkammer vorhanden ist, muss lediglich die Software, insbesondere bei dem aus der DE102009043484 bekannten System angepasst werden.

Nachfolgend wird die erfindungsgemäße Verwendung mindestens einer Speicherkammer für die zwei vorbeschriebenen Bremsanlagen näher erläutert.

Es zeigen:
- Fig. 1:: Hydraulischer Bremskraftverstärker mit konventioneller ABS-Ventilschaltung und Speicherkammer zur Verwendung im Störungsfall;
- Fig. 2:: elektromechanischer Bremskraftverstärker mit Speicherkammern, welche erfindungsgemäß für den Störungsfall des Antriebs oder Getriebes zum Druckabbau verwendet werden.

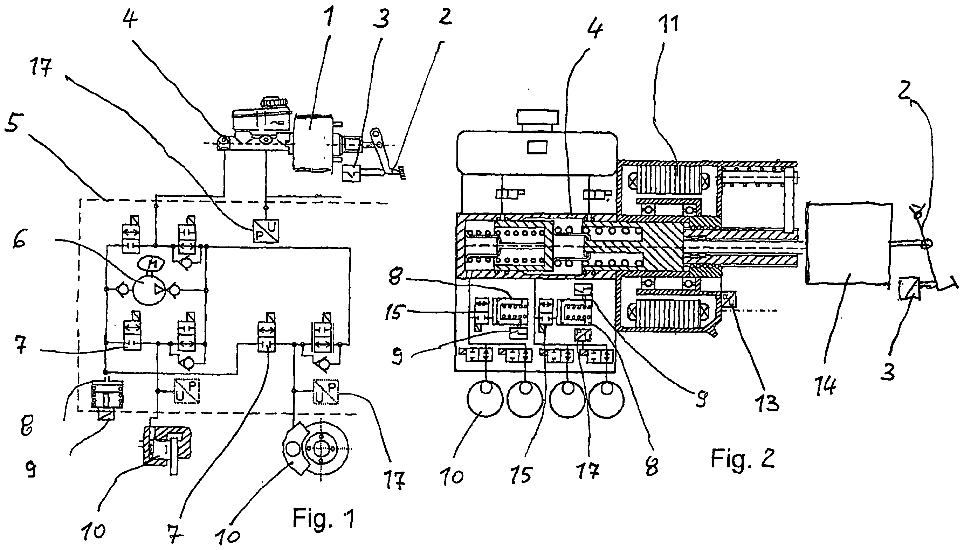

Die Figur 1 zeigt eine herkömmliche Bremsanlage mit ABS-System mit der bekannten Ventilschaltung und Pumpe, sowie einem Bremskraftverstärker 1 für einen Bremskreis, auf deren detaillierte Beschreibung verzichtet wird.

Im oberen Bildteil ist der getrennt angeordnete Bremskraftverstärker 1 mit Tandemhauptzylinder 4 dargestellt, der über das Bremspedal 2 betätigt wird. Mit dem Bremspedal 2 ist ein Pedalwegschalter oder Sensor 3 verbunden, welcher den Bremsbeginn anzeigt oder auch zur Bremskraftverstärkung verwendet wird. Die separate Einheit, als HCU 5 bezeichnet, verwendet Komponenten zur Druckmodulation von ABS und ESP. Für ESP werden weitere Magnetventile eingesetzt, z.B. zum Druckaufbau ohne Bremskraftverstärkeraktivierung, welche nicht dargestellt sind. Für diese Funktion wird auch ein oder mehrere Druckgeber 17 verwendet. Gerät ein Rad infolge von zu viel Bremsmoment in größeren Schlupf, so wird das mittels einer Hydraulikleitung mit dem Bremskolben verbundene Auslassventil 7 zur Druckabsenkung kurzzeitig geöffnet, wodurch sowohl Druckmittel in die Speicherkammer 8 gelangt und als auch von der Rückförderpumpe 6 zum Hauptzylinder 4 zurück gepumpt wird.

Tritt nun der Fehlerfall mit blockiertem Antrieb ein, so wird zur Druckreduzierung das Pedal 2 in Richtung Ausgangsstellung bewegt. Hierbei erfolgt infolge der Blockierung jedoch nicht die zur Pedalstellung passende Druckreduzierung. Um die Relation zwischen Pedalstellung bzw. Pedalweg und Solldruck wieder einzuregeln werden alle Auslassventile 7 solange geöffnet bis die Relation von Pedalweg und Druckgeber 17 wieder gegeben ist. In vielen Fällen wird das Bremspedal 2 in die Ausgangsstellung bewegt, was Druck Null entsprechen soll. Wird nun gleichzeitig die Rückförderpumpe 6 eingeschaltet, so wirkt deren Druck gegen den blockierten Antrieb, was wiederum zur Folge haben kann, dass der hohe Druck den Hauptzylinderkolben entgegen dem blockierten Antrieb verstellt und der Druck entsprechend dem Vorgabewert, z. B. Pedalweg, abgebaut wird. Wenn das Bremspedal 2 sich in der Ausgangsstellung befindet, wird in diesem Fall der Kolben über das Schnüffelloch bewegt und somit Druck Null erzeugt, was über den Druckgeber im THZ-Kreis möglich ist.

Ist die Blockierung so stark, dass die Rückförderpumpe 6 keine Wirkung hat, so muss sie entweder bei maximal zulässigem Druck, welcher vom Druckgeber 17 gemessen wird, abgeschaltet werden oder sie blockiert und wird über die Drehzahl oder Stromerkennung abgeschaltet. In diesem Fall ist die Druckreduzierung durch das Speichervermögen der Speicherkammer gegeben. Wenn kein Druckgeber im Radkreis eingebaut ist, so wird im Fehlerfall solange das Auslassventil 7 geöffnet, bis wieder durch größeren Pedalweg ein Druckanstieg gewünscht wird oder die Auslassventile 7 bleiben bei "Pedal in Ausgangsstellung" eine bestimmte Zeit offen, damit die Speicherkammer 8 gefüllt wird. Die Füllung ist stets abhängig vom vor der Blockierung eingesteuerten Bremsdruck. Ist dieser im Teilbremsbereich, so kann der Druck ohne wirksame Rückförderpumpe auf niedrige Werte abgebaut werden, so dass der Fahrer zwar eine Warnanzeige erhält, aber ohne weiteres auf den nächsten Parkplatz fahren kann. Ist der eingesteuerte Druck hoch, so kann er nur bei kleinerer Geschwindigkeit mit der Motorkraft zur nächsten Parkmöglichkeit fahren. Entsprechende Hinweise kann er im Display erhalten. So kann er dem gefährlichen Stehenbleiben auf der Fahrbahn entkommen. Dieser Fall wird extrem selten auftreten, da ein hoher Bremsdruck auch hohe Rückstellkräfte auf den Kolben bewirkt, was dem vollständigen Blockieren entgegen wirkt.

Die Figur 2 zeigt ein System entsprechend DE 102 009 043 484. Dieses System besitzt einen Wegsimulator mit zusätzlichen Komponenten, die hier nur mit Pedalinterface 14 beschrieben sind. Entsprechend dem vorzugsweise mittels des Sensors 3 gemessenen Pedalwegs wird der Elektromotor 11 zur Bremsdruckerzeugung über den Tandemhauptzylinder (THZ) 4 angesteuert. In der Verbindungsleitung vom THZ 4 zum Bremssattel 10 sind Speicherkammern 8 eingesetzt, die über vorgeordnete bzw. vorgeschaltete schaltbare Magnetventile 15 gefüllt oder entleert werden können. Dies kann z. B. zur Nachförderungen von Druckmittel in die Bremskreise zur Bremsbelag-Lüftspielsteuerung oder zur Leerwegsteuerung gemäß der DE 102 009 04 484 eingesetzt werden.

Wie beim Bremssystem der Figur 1 können die Speicherkammern 8 auch im vorbeschriebenen Fehlerfall genutzt werden. Der Unterschied besteht lediglich darin, dass keine Rückförderpumpe vorhanden ist. Tritt der Fehlerfall ein, so wird dieser durch Vergleich von Pedalweg, gemessen mit Sensor 3, und Druck im Hauptbremszylinder, gemessen mit Sensor 9, erkannt und durch Öffnen der den Speicherkammern 8 vorgeschalteten Schaltventile 15 in beiden Bremskreisen der Druckabbau entsprechend dem Pedalwegsignal eingeleitet bzw. eingeregelt. Der Störungsfall kann zudem durch Vergleich von Pedalweg, gemessen mit Sensor 3, und des gemessenen Motorstroms des Antriebs erkannt bzw. ermittelt werden.

Auch bei diesem Bremssystem ist, wie beim Bremssystem der Fig. 1 beschrieben, der Druckabbau in die Speicherkammer 8 abhängig von der Höhe des Einsteuerdrucks. Bei kleineren Werten ist der Druckabbau bestimmt durch die Speicherdruckkennlinie, bei Kolbenspeicher durch die effektive Vorspannfeder, was ca. 3 - 5 bar bewirkt. Dieser Druck ist für ein Weiterfahren zum nächsten Parkplatz durch entsprechende Hinweise im Display völlig unkritisch. Dagegen gilt bei hohem Steuerdruck das in Fig. 1 Gesagte.

Erfolgt bei den Bremssystemen entsprechend der Figuren 1 und 2 während der Fahrt zum Parkplatz ein erneuter Druckaufbau, so kann dies in beiden Systemen durch direkte Wirkung vom Bremspedal für die THZ-Kolben erfolgen. Es kann dabei durch Öffnen der Ventile 7 bzw. 15 aus dem Speicher im niedrigen Druckbereich Druckmittel wieder in die Bremskreise zurückgeführt werden. Hierzu sind verschiedene Steuerungsmöglichkeiten denkbar, die in der Vielfalt nicht beschrieben werden, da sich an der grundsätzlichen Lösung nichts ändert.

Wie bereits erläutert, ist der Mehraufwand bei der erfindungsgemäßen Lösung für eine wirksame Abhilfe für den kritischen Fehlerfall sehr gering.

### Bezugszeichenliste

- 1: Bremskraftverstärker (BKV)
- 2: Bremspedal
- 3: Pedalwegschalter / Sensor
- 4: Tandemhauptzylinder (THZ)
- 5: HCU
- 6: Rückförderpumpe
- 7: A-Ventil
- 8: Speicherkammer
- 9: Speicherkammerschalter / Sensor
- 10: Bremssattel
- 10a: Bremskolben
- 11: E-Motor
- 12: Pedalstange
- 13: Drehwinkelgeber
- 14: Speicherkammer MV
- 15: Druckgeber

## Patentansprüche

1. Bremssystem mit einem Bremskraftverstärker, bei dem mittels mindestens einem schaltbaren Ventil (7, 15) Druckmittel aus mindestens einer Radbremse (10) in eine Speicherkammer (8) leitbar ist, wobei eine Steuerungseinrichtung zumindest das mindestens eine schaltbare Ventil (7, 15) steuert, **dadurch gekennzeichnet, dass** im Störungsfalle des Bremskraftverstärkers (1), insbesondere wenn dessen Antrieb (11) oder das zwischen Antrieb (11) und Kolben des Hauptbremszylinders (4) zwischengeschaltete Getriebe blockiert ist, die mindestens eine Speicherkammer (8) zur Aufnahme von Druckmittel aus mindestens einer Radbremse oder mindestens einem Bremskreis und somit zum Druckabbau in mindestens einer Radbremse dient.

2. Bremssystem nach Anspruch 1, **dadurch gekennzeichnet, dass** jeder Bremskreis eine Speicherkammer (8) mit zugehörigem schaltbaren Ventil (7, 15) zum Druckabbau im Störungsfall aufweist.

3. Bremssystem nach Anspruch 1 oder 2, **dadurch gekennzeichnet, dass** die Steuereinrichtung die Speicherkammer (8) für die ABS- und/oder ESP-Funktion nutzt.

4. Bremssystem nach einem der Ansprüche 1 bis 3, **dadurch gekennzeichnet, dass** das Bremssystem einen Wegsimulator aufweist.

5. Bremssystem nach einem der vorhergehenden Ansprüche, **dadurch gekennzeichnet, dass** die Steuereinrichtung mittels Sensoren (3, 13, 17) den Störungsfall durch Vergleich der Eingangssignalgrößen "Kolbenweg" und/oder "Druck im Bremskreis" und/oder "Motorstrom des Antriebs" einerseits und "Pedalweg" und/oder "Pedalkraft" andererseits erkennt.

6. Bremssystem nach einem der vorhergehenden Ansprüche, **dadurch gekennzeichnet, dass** eine Rückförderpumpe (6) des ABS-Systems Druckmittel zur Zurückstellung des Kolbens des Hauptbremszylinders (4) in den Hauptbremszylinders (4) fördert.

7. Verfahren unter Verwendung eines Bremssystems nach einem der vorhergehenden Ansprüche, **dadurch gekennzeichnet, dass** die Steuereinrichtung das mindestens eine schaltbare Ventil (7, 15) im Störungsfall des Antriebs und/oder des zwischen Antrieb und Kolben des Hauptbremszylinders (4) zwischengeschalteten Getriebes zum Druckabbau in mindestens einer Radbremse öffnet, sofern zuvor das Bremspedal zum Druckaufbau betätigt worden war.

8. Verfahren nach Anspruch 7, **dadurch gekennzeichnet, dass** die Steuereinrichtung mittels Sensoren (3, 13, 17) den Störungsfall durch Vergleich der Eingangssignalgrößen "Kolbenweg" und/oder "Druck im Bremskreis" einerseits und "Pedalweg" und/oder "Pedalkraft" andererseits erkennt.

9. Verfahren nach Anspruch 7 oder 8, **dadurch gekennzeichnet, dass** bei aufgetretenem Störungsfall und erfolgtem Druckabbau mittels der Speicherkammer(n) (8) bei einer erneuten Bremsung mittels des Bremspedals (2) der Kolben des Hauptbremszylinders (4) zum Druckaufbau verstellt wird, wobei das jeweilige schaltbare Ventil (7, 15) geschlossen bleibt.

10. Verfahren nach Anspruch 7 oder 8, **dadurch gekennzeichnet, dass** bei aufgetretenem Störungsfall und erfolgtem Druckabbau mittels der Speicherkammer(n) (8) bei einer erneuten Bremsung mittels des Bremspedals (2) durch Öffnen des jeweiligen schaltbaren Ventils (7, 15) das in der Speicherkammer (8) gespeicherte Druckmittel zum Druckaufbau in mindestens einer Radbremse (10) des zugehörigen Bremskreises geleitet wird.

## Claims

1. A brake system having a brake servo unit, in which pressure medium can be guided by means of at least one switchable valve (7, 15) from at least one wheel brake (10) into an accumulator chamber (8), wherein a control device controls the at least one switchable valve (7, 15), **characterized in that**, in the event of a malfunction of the brake servo unit (1), in particular, when the drive (11) thereof or the gear mechanism connected between the drive (11) and the piston of the brake master cylinder (4) is blocked, the at least one accumulator chamber (8) serves to receive pressure medium from at least one wheel brake or at least one brake circuit and therefore to reduce pressure in at least one wheel brake.

2. The brake system according to claim 1, **characterized in that** each brake circuit comprises an accumulator chamber (8) with an associated switchable valve (7, 15) for reducing pressure in the event of a malfunction.

3. The brake system according to claim 1 or 2, **characterized in that** the control device utilizes the accumulator chamber (8) for the ABS function and/or the ESP function.

4. The brake system according to any one of claims 1 to 3, **characterized in that** brake system comprises a path simulator.

5. The brake system according to any one of the preceding claims, **characterized in that** the control device detects the malfunction by means of sensors (3, 13, 17) by comparing the input signal variables "piston travel" and/or "pressure in brake circuit" and/or "motor current of the drive", on the one hand, and "pedal travel" and/or "pedal force", on the other.

6. The brake system according to any one of the preceding claims, **characterized in that** a return pump (6) of the ABS system conveys pressure medium into the brake master cylinder (4) to return the piston of the brake master cylinder (4).

7. A method of using a brake system according to any one of the preceding claims, **characterized in that** the control device opens the at least one switchable valve (7, 15) in the event of a malfunction of the drive and/or of the gear mechanism connected between the drive and the piston of the brake master cylinder (4) to reduce pressure in at least one wheel brake if the brake pedal has previously been actuated to build up pressure.

8. The method according to claim 7, **characterized in that** the control device detects the malfunction by means of sensors (3, 13, 17) by comparing the input signal variables "piston travel" and/or "pressure in brake circuit", on the one hand, and "pedal travel" and/or "pedal force", on the other.

9. The method according to claim 7 or 8, **characterized in that**, when a malfunction has occurred and pressure has been reduced by means of the accumulator chamber(s) (8), the piston of the brake master cylinder (4) is moved to increase pressure during a renewed braking by means of the brake pedal (2), with the respective switchable valve (7, 15) remaining closed.

10. The method according to claim 7 or 8, **characterized in that**, when a malfunction has occurred and pressure has been reduced by means of the accumulator chamber(s) (8), the pressure medium stored in the accumulator chamber (8) is guided by opening the respective switchable valve (7, 15) into at least one wheel brake (10) of the associated brake circuit during a renewed braking by means of the brake pedal (2) to build up pressure.

## Revendications

1. Système de freinage comprenant un amplificateur de force de freinage, dans lequel au moyen d'au moins une vanne commutable (7, 15), un agent sous pression peut être amené depuis au moins un frein de roue (10) jusque dans une chambre d'accumulation (8), dans lequel un dispositif de commande commande au moins ladite au moins une vanne commutable (7, 15), **caractérisé en ce que** dans un cas de perturbation de l'amplificateur de force de freinage (1), en particulier lorsque son entraînement (11) ou le mécanisme interposé entre l'entraînement (11) et le piston du maître-cylindre (4) de freinage est bloqué, ladite au moins une chambre d'accumulation (8) sert à absorber l'agent sous pression depuis au moins un frein de roue ou depuis au moins un circuit de freinage, et donc à la réduction de pression dans au moins un frein de roue.

2. Système de freinage selon la revendication 1, **caractérisé en ce que** chaque circuit de freinage comprend une chambre d'accumulation (8) avec une vanne commutable associée (7, 15) pour la réduction de pression dans un cas de perturbation.

3. Système de freinage selon la revendication 1 ou 2, **caractérisé en ce que** le dispositif de commande utilise la chambre d'accumulation (8) pour la fonction d'antiblocage ("ABS") et/ou la fonction d'antipatinage ("ESP").

4. Système de freinage selon l'une des revendications 1 à 3, **caractérisé en ce que** le système de freinage comprend un simulateur de trajet.

5. Système de freinage selon l'une des revendications précédentes, **caractérisé en ce que** le dispositif de commande reconnaît, au moyen de capteurs (3, 13, 17), le cas de perturbation par comparaison des grandeurs de signaux d'entrée que sont "course du piston" et/ou "pression dans le circuit de freinage" et/ou "courant moteur de l'entraînement" d'une part et "course de pédale" et/ou "force de pédale" d'autre part.

6. Système de freinage selon l'une des revendications précédentes, **caractérisé en ce qu'**une pompe de retour (6) du système ABS refoule de l'agent sous pression jusque dans le maître-cylindre (4) pour le retour du piston du maître-cylindre (4).

7. Procédé utilisant un système de freinage selon l'une des revendications précédentes, **caractérisé en ce que** le dispositif de commande ouvre ladite au moins une vanne commutable (7, 15) dans le cas de perturbation de l'entraînement et/ou du mécanisme interposé entre l'entraînement et le piston du maître-cylindre (4) pour la réduction de pression dans au moins un frein de roue, dans la mesure où la pédale de frein a été auparavant actionnée pour la montée en pression.

8. Procédé selon la revendication 7, **caractérisé en ce que** le dispositif de commande reconnaît, au moyen de capteurs (3, 13, 17), le cas de perturbation par comparaison des grandeurs de signaux d'entrée que sont "course du piston" et/ou "pression dans le circuit de freinage" d'une part et "course de pédale" et/ou "force de pédale" d'autre part.

9. Procédé selon la revendication 7 ou 8, **caractérisé en ce que**, lorsqu'un cas de perturbation s'est produit et qu'une réduction de pression a eu lieu au moyen de la ou des chambre(s) d'accumulation (8), lors d'un nouveau freinage au moyen de la pédale de frein (2) le piston du maître-cylindre (4) est déplacé pour la montée en pression, et la vanne commutable respective (7, 15) reste fermée.

10. Procédé selon la revendication 7 ou 8, **caractérisé en ce que** lorsqu'un cas de perturbation s'est produit et qu'une réduction de pression a eu lieu au moyen de la ou des chambres d'accumulation (8), lors d'un nouveau freinage au moyen de la pédale de frein (2), par ouverture de la vanne commutable respective (7, 15), l'agent sous pression accumulé dans la chambre d'accumulation (8) est amené pour la montée en pression dans au moins un frein de roue (10) du circuit de freinage associé.
